# EUROPÄISCHE PATENTSCHRIFT

(11) **EP 0 487 664 B1**
(45) Veröffentlichungstag und Bekanntmachung des Hinweises auf die Patenterteilung: **20.09.1995**
(21) Anmeldenummer: 91909208.0
(22) Anmeldetag: 28.05.1991
(51) Int. Cl.: A47J 37/06

(54) **MEHRZWECK-CHEMINEE FÜR FREILUFTAUFSTELLUNG**
MULTI-PURPOSE FIREPLACE FOR OUTDOOR USE
CHEMINEE DE PLEIN AIR A PLUSIEURS USAGES

(30) Priorität: 18.06.1990 CH 2019/90
(43) Veröffentlichungstag der Anmeldung: 03.06.1992
(73) Patentinhaber: HUNZIKER, Werner, CH-5040 Schöftland (CH)
(72) Erfinder: HUNZIKER, Werner, CH-5040 Schöftland (CH)
(74) Vertreter: Feldmann, Clarence Paul
(86) Internationale Anmeldenummer: CH9100124
(87) Internationale Veröffentlichungsnummer: WO9119448

(56) Entgegenhaltungen:
- CH-A- 84 024
- DE-A- 3 618 651
- DE-A- 3 824 413
- FR-A- 2 562 213
- US-A- 3 568 590
- US-A- 4 829 977

## Beschreibung

Die vorliegende Erfindung betrifft ein Mehrzweck-Cheminée gemäss Oberbegriff des Patentanspruches 1.

Aus der DE-A1-3 618 651 ist ein Mehrzweck-Cheminée für Freiluftaufstellung der eingangs erwähnten Art bekannt.

Dieses bekannte Mehrzweck-Cheminée ist transportabel ausgeführt. Das Gehäuse steht dabei auf Stützbeinen. Die Stützbeine sind für die Aufstellung des Mehrzweck-Cheminées auf weichem Untergrund ungeeignet. Im unteren Teil des Gehäuses befindet sich ein mit feuerfestem und wärmedämmendem Material, insbesondere mit Schamottestein ausgekleideter Backraum. Der Backraum dient gleichzeitig als Feuerstelle zumindest für den Backraum. Ueber dem Backraum ist ein aus pyramidenstumpfförmig verlaufenden Metallwänden gefertigter Rauchfang angeordnet, dessen Innenraum zur Aufnahme eines an sich bekannten Grillgerätes und einer Räucherkammer mit Abluftabzug vorgesehen ist.

Zwischen dem Backraum und dem Rauchfang ist eine verschliessbare Oeffnung vorhanden, die die Räucherkammer mit der im Backraum liegenden Feuerstelle verbindet. Um Grillieren zu können, muss noch über der Decke des Backraumes ein Feuerrost mit brennender Grillkohle angebracht werden. Die Feuerung im Backraum reicht für das Grillieren nicht aus. Bei diesem Mehrzweck-Cheminée sind zwei Feuerstellen erforderlich, um die für die unterschiedlichen Zwecke des Cheminées gestellten Bedingungen erfüllen zu können. Die Glutkohle muss vor dem Backen aus dem Backraum entfernt werden, was nicht ungefährlich und unangenehm ist. Der Backraum dieses Mehrzweck-Cheminées braucht etwa 1,5 bis 2 Stunden, um die Backtemperatur zu erreichen. Vor der Wiederholung eines Backprozesses muss der Backraum erneut mit Brennstoff gefüllt und aufgeheizt werden. Für die Heizung des Backraumes wird ausserdem ein teures Hartholz, wie Buchenholz, verwendet. Dieses Mehrzweck-Cheminée kann zumindest während der Aufheizzeit und dem Backen keine Wärme an einen allfälligen Sitzplatz abgeben. Das Mehrzweck-Cheminée ist ausserdem verhältnismässig teuer. Das gleichzeitige Backen und Räuchern ist nicht vorgesehen. Das Backen im Dauerbetrieb ist nicht möglich. Im übrigen müssen zwei verhältnismässig teure Brennstoffe, wie Hartholz und Grillkohle, verwendet werden.

In FR-A-2 562 213 ist ein Cheminée mit Grill und Backraum offenbart, das lediglich eine Feuerstelle benötigt. Der Backraum befindet sich dabei über dem Grillraum, wobei beide von einem Gehäuse umgeben sind, das zudem den Feuerraum aufnimmt. Das Gehäuse ist zylindrisch gestaltet, wobei es einteilig ist.

Aufgabe der vorliegenden Erfindung ist es, ein Mehrzweck-Cheminée zu entwickeln, das einfach und kostengünstig ist und einen gleichzeitigen Dauerbetrieb aller vorhandenen Funktionen, wie Backen, Kochen, Braten, Grillieren zulässt und dabei noch einen vor dem Cheminée liegenden Sitzplatz zu erwärmen vermag.

Die gestellte Aufgabe löst ein Mehrzweck-Cheminée mit den Merkmalen des Patentanspruches 1.

Dieses Mehrzweck-Cheminée hat nur eine einzige, vom Backraum getrennte Feuerstelle, wo ohne Unterbruch gefeuert werden kann. Dadurch, dass der Backraum nicht durch wärmedämmendes Material sondern durch eine Metallwandung umgeben ist, reduziert sich die Aufheizzeit auf etwa 15 bis 20 Minuten. Bis die ideale Backtemperatur erreicht ist, kann der Backvorgang ohne Unterbruch wiederholt werden. Die Temperatur im Backraum und auch auf der über dem Backraum liegenden Grill-, Brat- und Kochebene kann durch kleineres oder grösseres Feuer oder durch Oeffnen und Schliessen des Backraumes reguliert werden. Zum Heizen sind kostengünstige Weichholzarten geeignet. Das Feuer kann während dem Backen, Grillieren, Braten und Kochen über die Cheminéeöffnung auch noch einen Sitzplatz erwärmen.

Das äussere Gehäuse besteht mindestens aus vier ineinandergreifende Seitenwände. Die vorgefertigten Seitenwände werden ineinandergreifend zusammengesteckt. Durch diese Massnahme erübrigen sich aufwendige Zusammenhaltevorrichtungen. Zwei gegenüberliegende Seitenwände des Gehäuses weisen eine T-Form und die beiden anderen gegenüberliegenden Seitenwände eine auf den Kopf gestellte T-Form auf, wobei die beiden T-Balken jeweils der Wanddicke entsprechende Länge und mindestens eine die Seitenwände zusammenhaltende Schrägfläche aufweisen. Diese Ausbildung der Seitenwände erlaubt einen einfachen Zusammenbau des Gehäuses.

Das Gehäuse kann über dem Backraum für Grill- und/oder Brat- und/oder Kochzwecke vorgesehene horizontale Querstäbe aufweisen, die durch mindestens eine mindestens einen Rauchdurchlass freilassende Abdeckplatte abdeckbar sind. Die Querstäbe ermöglichen die Auflage eines Grillrostes oder eines Brat- oder Kochgeschirres. Mehrere wegnehmbare feuerfeste Abdeckplatten können unter Freilassung mindestens eines Rauchdurchlasses auf zwischen zwei gegenüberliegenden Seitenwänden des Gehäuses verlaufende Querstäbe aufgelegt sein. Die Grill- und/oder Brat- und/oder Kochflächen können durch Auflegen und Entfernen von feuerfesten Abdeckplatten den jeweiligen Erfordernissen angepasst werden.

Das Gehäuse ist mit Vorteil auf eine Bodenplatte aufgestellt. Mit einer Bodenplatte kann das Cheminée auch auf einer verhältnismässig weichen Unterlage aufgestellt werden.

Das Gehäuse kann durch einen mittels eines am Gehäuse befestigten Scharniers wegklappbaren, pyramidenstumpfförmigen Rauchfang abdeckbar sein. Der Rauchfang ist vorallem bei ausschliesslicher Benützung des Backraumes vorteilhaft.

Das Gehäuse besteht vorteilhafterweise aus Schwerbeton.

Aus Schwerbeton lassen sich die Seitenwände und auch die Bodenplatte einfach herstellen.

Das Gehäuse kann um die Feuerstelle mit bedingt feuerfesten, nicht wärmespeichernden Betonplatten ausgekleidet sein. Das Gehäuse wird durch diese Massnahme um die Feuerstelle durch die auswechselbaren Betonplatten wirksam geschützt und die Temperaturregelung ist variabel, weil so der Backraum schnell auf die Temperaturänderungen der Feuerstelle reagiert.

Der Backraum ist vorteilhafterweise durch ein zylindrisches, mindestens an einer der Seitenwände des Gehäuses befestigtes, mit einer Türe von aussen verschliessbares Metallfass begrenzt. Diese Lösung bietet eine wirtschaftlich vorteilhafte Verwendung eines auch gebrauchten Metallfasses. Metallfässer werden nach Gebrauch oft weggeworfen, diese Lösung bietet die Möglichkeit für eine Wiederverwertung der Metallfässer. Das Metallfass kann mit einem für die Aufnahme von Backwaren bestimmten, horizontalen Einlageblech ausgerüstet sein. Das Einlageblech ergibt einerseits eine horizontale Backfläche im runden Metallfass und andererseits beabstandet die Backware von der direkt und möglicherweise ungleichmässig beheizten unteren Oberfläche des Metallfasses.

Im Folgenden wir anhand der beiliegenden Zeichnungen ein Ausführungsbeispiel der Erfindung näher beschrieben. Es zeigen:
- Figur 1: ein Mehrzweck-Cheminée von vorne und
- Figur 2: von der Seite;
- Figur 3: das Gehäuse des Mehrzweck-Cheminées bei entferntem Rauchfang von oben.

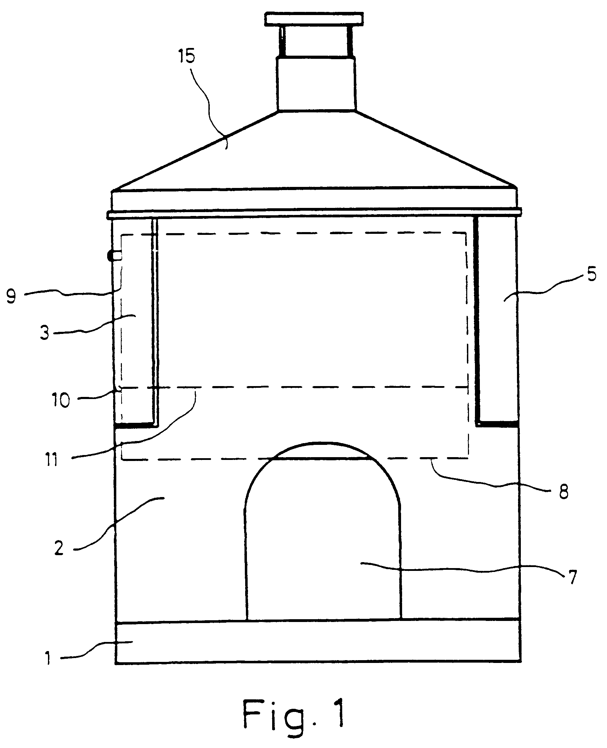

In Figur 1 ist ein Mehrzweck-Cheminée von vorne gesehen dargestellt. Das Cheminee weist eine Bodenplatte 1 auf.

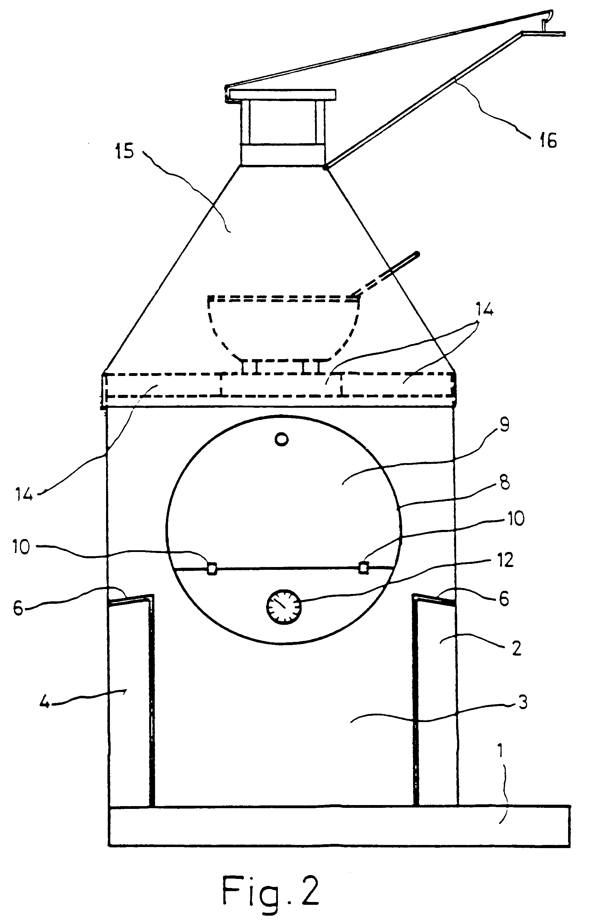

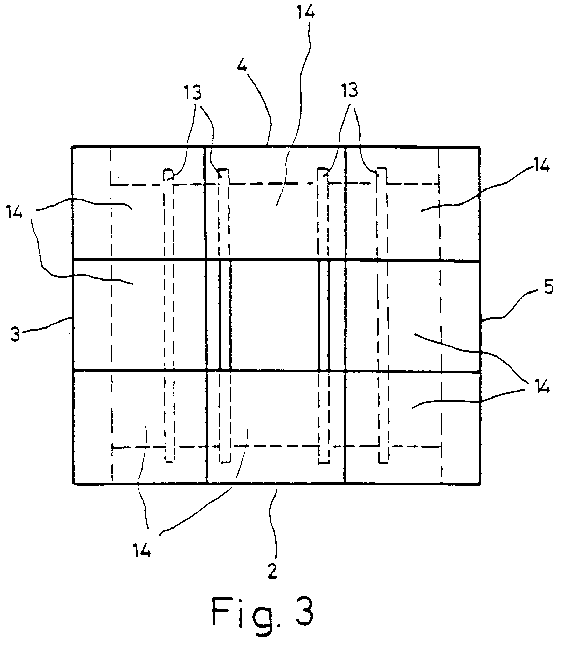

Auf dieser Bodenplatte 1 sind vier vertikale Seitenwände 2,3,4 und 5 aufgestellt, die das äussere Gehäuse des Cheminées bilden. Die Seitenwände 2,3,4 und 5 sind ineinandergreifend geformt. Die zwei gegenüberliegenden Seitenwände 3,5 haben eine T-Form und die anderen gegenüberliegenden Seitenwände 2,4 die Form eines auf dem Kopf gestellten T, wie es auch in den Figuren 2 und 3 ersichtlich ist. Figur 2 zeigt das Cheminée von der Seite und Figur 3 von oben bei entferntem Rauchfang. Die Länge der T-Balken entspricht der Wanddicke der Seitenwände 2,3,4 und 5. Die T-Balken von je zwei benachbarten Seitenwänden 2,3,4 und 5 sind an ihren zusammenpassenden Stellen mit Schrägflächen 6 versehen. Dank dieser Form der Seitenwände 2,34, und 5 können diese einfach, ohne besondere Zusammenhaltevorrichtungen zusammengesteckt werden.

Im unteren Teil des Gehäuses befindet sich ein Feuerraum, der über die Cheminéeöffnung 7 mit Brennmaterial versorgt werden kann. Als Brennmaterial werden vorallem kostengünstige Weichholzarten verwendet. Unmittelbar über der Feuerstelle ist ein Backraum angeordnet. Dieser Backraum ist durch eine Metallwandung begrenzt und besteht aus einem zylindrischen, in Figur 1 gestrichelt angedeuteten Metallfass 8. Das Metallfass 8 ist in einer entsprechenden Oeffnung der Seitenwand 3 unter Zwischenlage einer hitzebeständigen, nicht dargestellten Dichtung gehalten. In der gegenüberliegenden Seitenwand 5 sind zwei nicht näher dargestellte Bolzen eingesetzt, worauf sich das Metallfass 8 abstützt. Die Bolzen lagern mit Spiel in entsprechenden Durchgangslöchern in der Betonplatte der Seitenwand, die der Seitenwand mit der Oeffnung gegenüberliegt. Hierdurch werden Spannungsrisse durch unterschiedliche Wärmedehnungen vermieden. Zwischen der Metallwandung des Metallfasses 8 und den Seitenwänden 2 und 4 des Gehäuses sind Rauchkanäle freigelassen. Das der Seitenwand 3 zugekehrte Ende des Metallfasses 8 ist mit einer von aussen zugänglichen Türe 9 verschliessbar. Die Türe 9 kann um die Scharniere 10 heruntergeklappt werden. Hinter der Türe 9 ist im Metallfass 8 ein horizontales Einlageblech 11 vorhanden, das für die Aufnahme von Backwaren bestimmt ist. Der Backraum ist noch mit einem Thermometer 12 ausgerüstet.

Figur 3 zeigt das Gehäuse des Mehrzweck-Cheminées von oben. Wie man es hier sieht, sind zwischen den oberen Endbereichen der Seitenwände 2 und 4 horizontale Querstäbe 13 eingelegt. Diese Querstäbe 14 liegen über dem Backraum und sind für die Aufnahme von mindestens einem Grillrost und/oder von Brat- und/oder Kochgeschirren bestimmt. Auf diese Querstäbe 13 können acht feuerfeste Abdeckplatten 14 aufgelegt werden, wenn man nur an der für den Rauchdurchlass freigelassenen Stellen Esswaren zubereiten will.

Ueber dem Gehäuse ist ein pyramidenförmiger Rauchfang 15 vorgesehen. Der Rauchfang 15 ist aus Metallblech hergestellt und über das Scharnier 16 am Gehäuse befestigt. Wie in Figur 2 gezeigt ist, kann der Rauchfang 15 aufgeklappt werden, wenn man Grillieren, Braten oder Kochen will. Er kann geschlossen werden, wenn nur gebacken und/oder etwas unter dem Rauchfang 15 geschmort wird.

Der Rauchfang 15 kann auch fix auf dem Gehäuse angeordnet sein und lediglich durch eine aufklappbare Pyramidenaussenfläche zugänglich gemacht werden.

Die Seitenwände 2,3,4,5 des Gehäuses und die Bodenplatte 1 können aus Schwerbeton hergestellt sein. Das Gehäuse wird um die Feuerstelle an den Seitenwänden 2,3,4,5 und auch an der Bodenplatte 1 mit in den Zeichnungen nicht dargestellten Betonplatten ausgekleidet.

## Patentansprüche

1. Mehrzweck-Cheminée für Freiluftaufstellung mit einem Feuerraum, einem Backraum und mit mindestens einer über dem Backraum angeordneten Grillstelle, wobei der Backraum durch eine mit einer von aussen zugänglichen Türe (9) verschliessbare Metallwandung begrenzt ist und in einem den Feuerraum aufnehmenden äusseren Gehäuse unter Freilassung von Rauchkanälen zwischen der Metallwandung und dem Gehäuse befestigt ist, dadurch gekennzeichnet, dass der Backraum unmittelbar über der Feuerstelle angeordnet ist und dass das äussere Gehäuse mindestens aus vier ineinandergreifenden Seitenwänden (2,3,4,5) besteht, wobei zwei gegenüberliegende Seitenwände (3,5) des Gehäuses eine T-Form und die beiden anderen gegenüberliegenden Seitenwände (2,4) die Form eines auf den Kopf gestellten T aufweisen und wobei die beiden T-Balken jeweils der Wanddicke entsprechende Länge und mindestens eine die Seitenwände (2,3,4,5) zusammenhaltende Schrägfläche (6) aufweisen.

2. Mehrzweck-Cheminée nach Anspruch 1, dadurch gekennzeichnet, dass das Gehäuse über dem Backraum für Grill- und/oder Brat- und/oder Kochzwecke vorgesehene horizontale Querstäbe (13) aufweist, die durch mindestens eine mindestens einen Rauchdurchlass freilassende Abdeckplatte (14) abdeckbar sind.

3. Mehrzweck-Cheminée nach Anspruch 2, dadurch gekennzeichnet, dass mehrere wegnehmbare feuerfeste Abdeckplatten (14) unter Freilassung mindestens eines Rauchdurchlasses auf zwischen zwei gegenüberliegenden Seitenwänden (2,4) des Gehäuses verlaufenden Querstäbe (13) aufgelegt sind.

4. Mehrzweck-Cheminée nach einem der Ansprüche 1 bis 3, dadurch gekennzeichent, dass das Gehäuse auf eine Bodenplatte (1) aufgestellt ist.

5. Mehrzweck-Cheminée nach einem der Ansprüche 1 bis 4, dadurch gekennzeichnet, dass das Gehäuse durch einen mittels eines am Gehäuse befestigten Scharniers (16) wegklappbaren, pyramidenstumpfförmigen Rauchfang (15) abdeckbar ist.

6. Mehrzweck-Cheminée nach einem der Ansprüche 1 bis 5, dadurch gekennzeichnet, dass das Gehäuse aus Betonplatten besteht.

7. Mehrzweck-Cheminée nach einem der Ansprüche 1 bis 6, dadurch gekennzeichnet, dass das Gehäuse um die Feuerstelle mit bedingt feuerfesten, nicht wärmespeichernden Betonplatten ausgekleidet ist.

8. Mehrzweck-Cheminée nach Anspruch 1, dadurch gekennzeichnet, dass der Backraum durch ein zylindrisches, mindestens an einer der Seitenwände (2,3,4,5) des Gehäuses befestigtes, mit einer Türe (9) von aussen verschliessbares Metallfass (8) begrenzt ist.

9. Mehrzweck-Cheminée nach Anspruch 8, dadurch gekennzeichnet, dass der Backraum auswechselbar in einer Oeffnung entsprechend des Durchmessers des Metallfasses lagert und in der gegenüberliegenden Seitenwand auf eingeschobene Bolzen aufliegt, die in Durchgangsbohrungen mit Spiel lagern.

## Claims

1. A multipurpose fireplace for outdoor use having a hearth, a baking area and at least one grill positioned above the baking area, the baking area being bounded by a metal wall closable by a door (9) accessible from the outside and being fixed in an outer casing receiving the hearth, whilst leaving free flues between the metal wall and the casing, characterised in that the baking area is located immediately above the hearth and in that the outer casing comprises at least four interengaging side walls (2, 3, 4, 5), two facing side walls (3, 5) of the casing having a T-shape and the two other, facing side walls (2, 4) having the shape of an inverted T and wherein the two T-beams in each case have a length corresponding to the wall thickness and at least one sloping surface (6) holding together the side walls (2, 3, 4, 5).

2. A multipurpose fireplace according to claim 1, characterised in that the casing has horizontal crossbars (13) located above the baking area for grilling and/or roasting and/or cooking purposes and which can be covered by at least one cover plate (14) leaving free at least one flue.

3. A multipurpose fireplace according to claim 2, characterised in that several removable, refractory cover plates (14) are placed on the crossbars (13) running between two facing side walls (2, 4) of the casing, whilst leaving free at least one flue.

4. A multipurpose fireplace according to any one of the claims 1 to 3, characterised in that the casing is installed on a base plate (1).

5. A multipurpose fireplace according to any one of the claims 1 to 4, characterised in that the casing is coverable by a frustum-shaped chimney (15), which can be swung out by a hinge (16) fixed to the casing.

6. A multipurpose fireplace according to any one of the claims 1 to 5, characterized in that the casing is made from concrete slabs.

7. A multipurpose fireplace according to any one of the claims 1 to 6, characterised in that the casing is lined around the hearth with limited-refractory, non-heat-storing concrete slabs.

8. A multipurpose fireplace according to claim 1, characterized in that the baking area is bounded by a cylindrical metal drum (8) closable from the outside by a door and fixed to at least one of the side walls (2, 3, 4, 5) of the casing.

9. A multipurpose fireplace according to claim 8, characterized in that the baking area is interchangeably mounted in an opening corresponding to the metal drum diameter and rests on bolts inserted in the facing side wall which are located with clearance in through-holes.

## Revendications

1. Cheminée de plein air multi-usage comprenant un foyer, un espace de cuisson et au moins un grill disposé au-dessus de l'espace de cuisson, sachant que l'espace de cuisson est délimité par une paroi métallique pouvant être fermée par une porte (9) accessible de l'extérieur et est fixé dans un caisson extérieur contenant le foyer en ménageant des conduits de fumée entre la paroi métallique et le caisson, caractérisée en ce que l'espace de cuisson est situé directement au-dessus du foyer, et en ce que le caisson extérieur est composé d'au moins quatre parois latérales (2,3,4,5) emboîtées les unes dans les autres, sachant que deux parois latérales (3,5) du caisson se faisant face présentent la forme d'un T et que les deux autres parois latérales opposées (2,4) présentent la forme d'un T renversé, et sachant que les deux poutres en T présentent chaque fois une longueur correspondant à l'épaisseur de paroi et au moins une paroi oblique (6) maintenant les parois latérales (2,3,4,5) assemblées.

2. Cheminée multi-usage selon la revendication 1, caractérisée en ce que le caisson présente au-dessus de l'espace de cuisson des barres horizontales transversales (13) prévues pour griller et/ou rôtir et/ou cuire, lesquelles peuvent être recouvertes par au moins une plaque de recouvrement (14) présentant au moins un passage pour la fumée.

3. Cheminée multi-usage selon la revendication 2, caractérisée en ce que plusieurs plaques de recouvrement (14) résistantes au feu et amovibles sont posées sur deux barres transversales (13) s'étendant entre deux parois latérales opposées (2,4) du caisson en présentant au moins un passage pour la fumée.

4. Cheminée multi-usage selon l'une des revendications 1 à 3, caractérisée en ce que le caisson est placé sur une plaque de fond (1).

5. Cheminée multi-usage selon l'une des revendications 1 à 4, caractérisée en ce que le caisson peut être recouvert par une hotte (15) en forme de pyramide tronquée qui peut être rabattue au moyen d'une charnière (16) fixée au caisson.

6. Cheminée multi-usage selon l'une des revendications 1 à 5, caractérisée en ce que le caisson est composé de plaques de béton.

7. Cheminée multi-usage selon l'une des revendications 1 à 6, caractérisée en ce que le caisson est habillé de plaques de béton réfractaire et résistant au feu autour du foyer.

8. Cheminée multi-usage selon la revendication 1, caractérisée en ce que l'espace de cuisson est délimité par un tonneau de métal (8) cylindrique fixé à au moins l'une des parois latérales (2,3,4,5) du caisson et pouvant être fermé de l'extérieur par une porte (9).

9. Cheminée multi-usage selon la revendication 8, caractérisée en ce que l'espace de cuisson est logé de façon amovible dans une ouverture dont le diamètre correspond à celui du tonneau de métal et repose dans la paroi latérale opposée sur des boulons insérés qui sont logés avec un jeu dans des perçages de passage.
